# EUROPÄISCHE PATENTSCHRIFT

(11) **EP 0 513 720 B1**
(45) Veröffentlichungstag und Bekanntmachung des Hinweises auf die Patenterteilung: **30.08.1995**
(21) Anmeldenummer: 92107936.4
(22) Anmeldetag: 12.05.1992
(51) Int. Cl.: C09J 7/02

(54) **Abdeck- und Dichtungsband**
Masking and sealing tape
Bande de couverture et d'étanchéité

(30) Priorität: 15.05.1991 DE 4115839
(43) Veröffentlichungstag der Anmeldung: 19.11.1992
(73) Patentinhaber: Klauss, Günter, D-72664 Kohlberg (DE)
(72) Erfinder: Klauss, Günter, D-72664 Kohlberg (DE)
(74) Vertreter: Rüger, Rudolf, Dr.-Ing.

(56) Entgegenhaltungen:
- EP-A- 0 320 676
- CH-A- 510 103

## Beschreibung

Die Erfindung betrifft ein Abdeck- und Dichtungsband mit den Merkmalen des Oberbegriffs des Anspruches 1.

Aus der Praxis ist ein aus einem Polyurethanschaum bestehendes Dichtungsband bekannt, das dazu vorgesehen ist, den Längsschlitz an Rollädenkästen abzudichten. Es besteht aus einem flachen bandförmigen Träger, der auf einer Außenseite längs eines Randes mit einem Klebstoffstreifen versehen ist. Der Klebstoffstreifen ist unmittelbar auf dem Träger aufgebracht. Beim Abziehen des bekannten Bandes von der Unterlage bleibt die Klebstoffschicht auf der Unterlage haften und die Trennung erfolgt in dem Träger selbst.

Das bekannte Dichtungsband wird mit dem selbsthaftenden Klebstoffstreifen an dem Schlitz eines Rolladenkastens angeklebt, so daß der klebstofffreie Bereich eine auf dem Rolladen gleitende Dichtlippe bilden kann.

Aus der CH-A-510 103 ist ein Doppelklebeband für Buchbinderarbeiten bekannt. Dieses Doppelklebeband besteht aus einem folienartigen dünnen Träger, der an seinen beiden Außenseiten mit einer Klebstoffbeschichtung versehen ist. Die Klebstoffbeschichtung reicht jedoch auf jeder Seite nur über die Hälfe der Gesamtbreite des Bandes, so daß neben jedem Klebstoffstreifen auf jeder Seite ein klebstofffreier Streifen angrenzt. Die beiden Klebstoffstreifen sind gegeneinander versetzt, weshalb ein Klebstoffstreifen auf der einen Seite des Trägers mit einem klebstofffreien Streifen auf der anderen Seite des Trägers korrespondiert. Dadurch soll erreicht werden, daß beim Zusammenkleben von zwei Einzelblättern nach dem Falzen um die Mittellinie eine klebrandlose Heftung von mehreren Blättern möglich ist.

Aufgabe der Erfindung ist es, ein selbstklebendes Band zu schaffen, das beim Einputzen von Tür- oder Fensterstöcken oder ähnlichen Anwendungen sowohl als Dichtung zwischen dem Putz und dem Türstock fungiert und gleichzeitig die nicht zu verputzenden Teile gegen Verunreinigung schützt.

Zur Lösung dieser Aufgabe ist das selbstklebende Band durch die Merkmale des Anspruches 1 gekennzeichnet.

Da das neue selbstklebende Band auf beiden Seiten des Trägers in einem Streifen mit einem selbsthaftenden Klebstoff versehen ist, kann es sowohl auf einer Unterlage, beispielsweise einem Tür- oder Fensterstock, aufgeklebt werden, während die andere Seite, ähnlich wie bei einem doppelseitigen Klebeband, eine Klebefläche für eine Schutzfolie bildet. Die beiden Klebstoffstreifen erstrekken sich nicht über die gesamte Breite, so daß, bezogen auf einen Klebstoffstreifen, die jeweils gegenüberliegende Rückseite des Trägers von Klebstoff frei ist. Dadurch wird sowohl das Zurechtschneiden der Abdeckfolie als auch das nachträgliche Abziehen des nicht mehr benötigten Teils von der Unterlage wesentlich erleichtert. Die auf der Rückseite nicht vorhandene Klebstoffschicht verhindert außerdem ungünstige Wechselwirkungen mit dem feuchten aufzubringenden Mauerputz, während andererseits die dauerhafte Befestigung des als Dichtung wirkenden Teils auf dem Tür- oder Fensterstock mit Hilfe des Klebststoffs gewährleistet ist. Der zwischen Türstock und Putz verbleibende Teil des Dichtungsbandes verhindert Undichtigkeiten zwischen Putz und Türstock, die beispielsweise infolge des Feuchtigkeitsgangs des Tür- oder Fensterstocks auftreten könnten, da der Putz diesen Volumenschwankungen nicht folgen kann.

Die, bezogen auf die Längsachse des neuen selbstklebenden Bandes punktsymmetrisch angeordneten Klebstoffstreifen ermöglichen dem Anwender ohne weiteres das Abkleben von oben nach unten oder von unten nach oben, je nachdem, welche Verklebungsrichtung für ihn jeweils die günstigere ist

Vorteilhafterweise ist bei dem neuen selbstklebenden Band der Klebstoff nicht unmittelbar auf den aus Schaumstoff bestehenden Träger aufgebracht, so daß beim Abziehen des nicht mehr benötigten Teils des selbstklebenden Bandes nach dem Einputzen zuverlässig der Klebstoff von der Unterlage abgezogen werden kann und nicht etwa der Träger sich der Länge nach spaltet, weil die Haftfähigkeit des Klebstoffs auf der Unterlage größer ist als der Zusammenhalt im aus Schaumstoff bestehenden Träger.

Wenn die mit Klebstoff versehenen Streifen schmäler sind als die halbe Breite des Trägers, kann auch die Abdeck- und Schutzfolie, die ein Aneinanderhaften benachbarter Lagen im aufgewickelten Zustand verhindert, schmäler sein als die halbe Trägerbreite, damit, wenn das neue Band zu einer Rolle aufgewickelt ist, in der Mitte keine Überlappungen auftreten, die den Wickel unsicher machen würden oder den Träger in der Mitte quetschen würden.

Wenn die beiden Außenseiten des Trägers die beim Produktionsprozeß unmittelbar entstehenden Seiten sind, tragen sie jeweils durchgehende Häute, die ein Eindringen von Wasser in den Schaumstoffträger weiter behindern und außerdem das Haften der den Klebstoff tragenden Folie begünstigen.

In den Zeichnungen ist ein Ausführungsbeispiel des Gegenstandes der Erfindung dargestellt. Es zeigen:
Fig. 1 das erfindungsgemäße selbstklebende Band unter Veranschaulichung der einzelnen Lagen, die das Band aufweist, in einer perspektivischen Darstellung und
Fig. 2 einen Querschnitt durch eine Mauerlaibung mit eingesetztem Tür- oder Fensterstock zur Veranschaulichung der Anwendung des erfindungsgemäßen selbstklebenden Bandes.

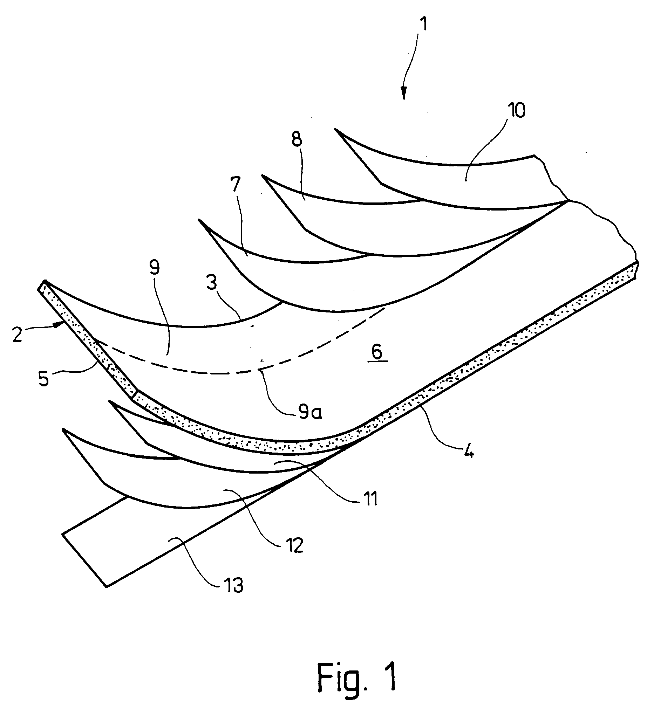

In Fig. 1 ist ein Abdeck- und Dichtungsband veranschaulicht, das im Lieferzustand auf eine große Rolle aufgewikkelt ist. Das Abdeck- und Dichtungsband 1 weist einen bandförmigen Träger 2 auf, der von zwei Rändern 3,4 begrenzt ist, die über die gesamte Länge des Abdeck- und Dichtungsbandes 1 denselben Abstand haben und im abgewikkelten Zustand, wenn der Träger 2 eben liegt, gerade sind.

Zwischen den beiden Rändern 3,4 erstrecken sich zwei flache Außenseiten 5,6, die über die gesamte Länge des Trägers 2 den gleichen Abstand voneinander haben.

Der bandförmige Träger 2 ist ca. 3 mm dick und besteht aus einem geschlossenzelligen Hochdruckpolyethylen. Die beiden Außenseiten 5 und 6 sind die natürlichen Außenseiten, die beim Produktionsprozeß entstehen. Sie weisen deswegen durchgehende wasserdichte Häute auf, während die beiden Ränder 3,4 Schnittränder sind, an denen die zellförmige Struktur sichtbar ist.

An der in Fig. 1 nach oben weisenden Außenseite 6 verläuft neben dem Rand 3 eine dünne reißfeste PVC-Folie 7, die mit der Außenseite 6 stoffschlüssig mit Hilfe eines Klebstoffs verbunden ist. Auf ihrer von der Außenseite 6 wegweisenden Seite ist die PVC-Folie über ihre gesamte Breite mit einer selbsthaftenden Klebstoffschicht 8 versehen, so daß auf der Außenseite 6 neben dem Rand 3 ein durch die Klebstoffschicht 8 definierter Streifen 9 entsteht, der unmittelbar an den Rand 3 angrenzt und durch eine gestrichelte Linie 9a angedeutet ist. Zum Schutz der Klebstoffschicht 8 beim Aufwickeln des Abdeck- und Klebebandes 1 ist schließlich ein siliconhaltiges Schutzpapier 10 vorhanden, das nur gering auf der Klebstoffschicht 8 haftet und jederzeit abgezogen werden kann, ohne die Klebstoffschicht 8 von der Folie 7 herunterzureißen.

Die Breite des Streifens 9 der Klebstoffschicht 8 gemessen in Richtung des Abstandes der beiden Ränder 3,4 voneinander, ist geringfügig kleiner als die Breite des Trägers 2, die zwischen 4 und 5 cm liegt.

Auch die in Fig. 1 nach unten weisende Außenseite 5 trägt eine dünne PVC-Folie 11, die mit der Oberseite 5 mittels eines Klebstoffes stoffschlüssig verbunden ist. Ihre von der Außenseite 5 wegweisende Oberseite ist mit einer Klebstoffschicht 12 versehen, die vor Gebrauch des Abdeck- und Dichtungsbandes 1 mittels eines streifenförmigen Schutzpapiers 13 abgedeckt ist. Somit ist auch die Außenseite 5 mit einem Streifen versehen, innerhalb dessen sich die Klebstoffschicht 12 erstreckt, jedoch grenzt im Falle der Außenseite 5 dieser Streifen an den Rand 4 an. Die Breite dieses Streifens der Klebstoffschicht 12 ist gleich wie die Breite des Streifens 9, in dem die Klebstoffschicht 8 vorhanden ist, nämlich etwas geringer als die Hälfte der Breite des Trägers 2. Dadurch wird erreicht, daß beim Aufwickeln des Abdeck- und Dichtungsbandes 1 die Schutzpapiere 9 und 13 benachbarter Windungen nicht überlappend nebeneinander liegen. Da beide Schutzpapiere 9 und 13 die gleiche Stärke aufweisen, entsteht ein sauberer spiralförmiger Wickel ohne Verdickung in der Mitte zwischen den Lagen, was entweder dort den Träger 2 komprimieren oder zu einem unsicheren Wickel führen würde.

Da die beiden Streifen, innerhalb derer sich die Klebstoffschichten 8 und 12 befinden, auf unterschiedlichen Außenseiten 5,6 des Trägers 2 liegen und an unterschiedliche Ränder 3,4 angrenzen, ist das neue Abdeck- und Dichtungsband 1 bezüglich seiner Längsachse punktsymmetrisch aufgebaut, d.h. ein Umdrehen des Abdeck- und Dichtungsbandes 1 um seine Längsachse ändert das Aussehen, wie es in Fig. 1 dargestellt ist, nicht. In jedem Fall ist auf beiden Außenseiten 5,6 der klebfähige Bereich auf den durch die gestrichelte Linie 9a begrenzten Bereich 9 beschränkt, der weniger als die Hälfte der Breite des Trägers 2 ausmacht. Würden beide Streifen 9 auf ein und dieselbe Unterlage projiziert werden, würden die Streifen 9 einander nicht überdecken.

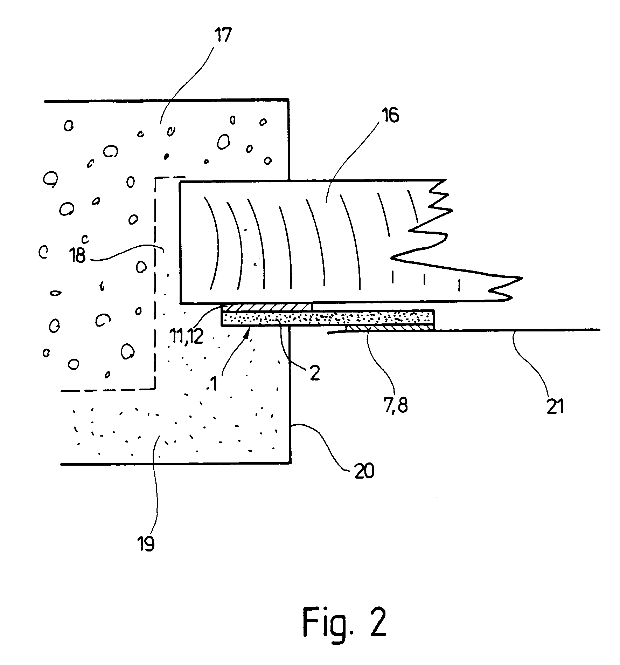

Die Verwendung des neuen Abdeck- und Dichtungsbandes ist in Fig. 2 veranschaulicht. Es dient dazu, einerseits einen Fenster- oder Türstock 16 in einer Mauerlaibung 17 abzudichten und andererseits gleichzeitig den nicht zu verputzenden Teil des Fenster- oder Türstocks 16 gegen Verunreinigung durch Mauerputz zu schützen.

Nach dem Einsetzen und Verankern des Tür- oder Fensterstocks 16 in einer entsprechenden Ausnehmung 18 der Mauerlaibung 17 wird nach Abziehen des Schutzpapiers 10 oder 13 das Abdeck- und Dichtungsband 1 auf derjenigen Seite des Tür- oder Fenster stocks 16 aufgeklebt, auf der später eine entsprechende Putzschicht 19 aufgebracht wird. Infolge seiner selbsthaftenden Klebstoffschicht 8 ist das Abdeck- und Dichtungsband 1 stoffschlüssig mit dem Tür- oder Fensterstock 16 verbunden, und zwar ist es so plaziert, daß der Putz 19 mit seiner Außenkante 20 etwa in der Mitte der Quererstreckung des Abdeck- und Dichtungsbandes 1, jedoch im Abstand von dem anderen klebfähigen Streifen 15, endet.

In Fig. 2 ist die Trägerfolie 11 zusammen mit der Klebstoffschicht 12 gemeinsam übertrieben veranschaulicht, um zu zeigen, in welchem Bereich das Abdeck- und Dichtungsband 1 auf dem Tür- oder Fensterstock 16 klebt.

Infolge dieser Art der Plazierung ragt das Abdeck- und Dichtungsband 1 über den später aufzubringenden Putz 19 in den freien Bereich und schützt den Tür- oder Fensterstock 16 gegen Verunreinigung durch Mauerputz an jenen Stellen, die nach dem Einputzen freibleiben sollen. Damit keine Putzspritzer die übrigen weiter abliegenden Teile bspw. des eingesetzten Türblatts oder Fensterrahmens verunreinigen, wird auch das andere Schutzpapier 9 bzw. 13 abgezogen, das infolge der Anordnung von dem Tür- oder Fensterstock 16 wegweist. Hierdurch entsteht ein durchgehender klebstoffhaltiger Streifen, auf dem eine dünne Schutzfolie 21 aufgeklebt wird, die die Öffnung des Tür- oder Fensterstocks überspannt. Im Falle eines Fensterstocks kann die Folie 21 gleichzeitig einen provisorischen Verschluß für die Fensteröffnung bilden, wenn die Fensterflügel noch nicht eingesetzt sind.

Wie Fig. 2 erkennen läßt, reicht die Schutzfolie 21 bis fast an die spätere Putzschicht 19 heran, ohne beim späteren Anputzen zu stören. Der durch die Klebstoffschicht 8 gebildete Streifen verläuft in einem deutlichen Abstand von der Außenkante 20 des Putzes, da bereits die Klebstoffschicht 12, mit der das Abdeck- und Dichtungsband 1 an dem Türstock 16 aufgeklebt ist, über die Außenkante 20 des Putzes 19 übersteht.

Nachdem der Tür- oder Fensterstock 16, wie beschrieben, vorbereitet ist, kann der Putz 19 aufgetragen werden, wobei er bis zu seiner Außenkante 20 das Abdeck- und Dichtungsband 1 überdeckt.

Sobald der Putz 19 ausgehärtet ist, wird, wenn auch die Schutzfolie 21 nicht mehr benötigt wird, mit einem scharfen Messer das Abdeck- und Dichtungsband 1 längs der Außenkante 20 durchgeschnitten und von dem Tür- oder Fensterstock 16 abgezogen. Das Aufbringen der Klebstoffschicht 8 bzw. 12 auf die reißfeste Trägerfolie 7,11 verhindert dabei, daß der eventuell auf dem Tür- oder Fensterstock 16 gut haftende Klebstoff die oberste Schicht des Trägers 2 herunterreißt und zusammen mit dieser Schicht auf dem Tür- oder Fensterstock 16 kleben bleibt. Die reißfeste Trägerfolie 7, 11 vermeidet dies und erzwingt das Ablösen der Klebstoffschicht 8 bzw. 12 von dem Tür- oder Fensterstock 16.

Nach dem Einputzen und Abtrennen des überstehenden Teils des Abdeck- und Dichtungsbandes 1 verbleibt ein Teil in dem Spalt zwischen dem Tür- und Fensterstock 16 und dient als dauerelastische verwitterunqsbeständige Dichtung, die den unterschiedlichen Ausdehnungskoeffizienten zwischen dem Tür- und Fensterstock 16 einerseits und dem Mauerwerk andererseits aufnimmt. Während des Einputzens hat der später über die Außenkante 20 überstehende Teil des Abdeck- und Dichtungsbandes 1 die Funktion eines Abdeckbandes, das Verunreinigungen des Tür- und Fensterstockes 16 durch Putzspritzer verhindert. Gleichzeitig dient dieser überstehende Teil als Träger für eine Schutzfolie, mit deren Hilfe auch die weitere Umgebung der zu verputzenden Laibung 17 geschützt werden kann.

## Patentansprüche

1. Selbstklebendes Abdeck- und Dichtungsband (1)
mit einem bandförmigen, zwei zueinander parallele Ränder (3,4) und zwei Außenseiten (5,6) aufweisenden Träger (2) aus einem geschlossenzelligen Schaumstoffmaterial,
mit auf einer Außenseite (5,6) des Trägers (2) angeordneten Klebstoff (8,12), der auf einen längs eines der Ränder (3,4) sich erstreckenden und an diesen angrenzenden Streifen (9) beschränkt ist, und
mit einem weiteren Streifen (9) Klebstoff (8,12), der auf der anderen Außenseite (5,6) des Trägers (2) vorhanden ist, wobei der weitere Streifen (9) an den anderen Rand (3,4) angrenzt.

2. Band nach Anspruch 1, dadurch gekennzeichnet, daß beide Streifen (9) gleich breit sind.

3. Band nach Anspruch 1, dadurch gekennzeichnet, daß jeder Streifen (9) weniger als halb so breit wie der Träger (2) ist.

4. Band nach Anspruch 1, dadurch gekennzeichnet, daß jeder Streifen (9) einen der Breite des Streifens (9) entsprechenden Folienstreifen (7,11) aufweist, der mit dem Träger (2) des selbstklebenden Bandes (1) stoffschlüssig verbunden ist und der auf seiner von dem Träger wegweisenden Seite den Klebstoff (8,12) trägt.

5. Band nach Anspruch 4, dadurch gekennzeichnet, daß der Folienstreifen (7,11) aus einer reißfesten Folie besteht.

6. Band nach Anspruch 1, dadurch gekennzeichnet, daß jedem der beiden Streifen (9) eine eigene Schutzfolie bzw. ein eigenes Schutzpapier (10,13) zugeordnet ist, das beim endlosen Aufwickeln des selbstklebenden Bandes (1) auf einer Rolle ein Ankleben benachbarter Windungen verhindert.

7. Band nach Anspruch 6, dadurch gekennzeichnet, daß die Abdeckfolie oder Abdeckpapiere (10, 13) der beiden Klebstoff (8,12) aufweisenden Streifen (9) des selbstklebenden Bandes (1) jeweils weniger als die Hälfte des Trägers (2) des Abdeck- und Dichtungsbandes (1) breit sind, derart, daß bei aufgewickeltem selbstklebendem Band (1) die Schutzfolien oder Schutzpapiere (10,13) der beiden Klebstoff (8,12) aufweisenden Streifen (9) zwischen zwei aufeinanderliegenden Wicklungslagen einander nicht überlappen.

8. Band nach Anspruch 1, dadurch gekennzeichnet, daß der Träger aus geschäumtem Hochdruckpolyethylen besteht, der auf beiden Außenseiten (5,6) eine wasserundurchlässige Haut aufweist.

## Claims

1. Adhesive masking and sealing tape (1) including a tape-like carrier (2) having two edges (3, 4) arranged parallel to one another, and two outer sides (5, 6), and made of closed-cell foam substance, with one of the outer sides (5, 6) of the carrier (2) being coated with an adhesive (8, 12) confined to a strip (9) running along and next to one of the edges (3, 4), and with a further strip (9) of adhesive (8, 12), present on the other outer side (5, 6) of the carrier (2), whereby the other strip (9) is next to the other edge (3, 4).

2. Tape in accordance with Claim 1, characterized in that both strips (9), are of equal width.

3. Tape in accordance with Claim 1, characterized in that, each strip (9) is less than half as wide as the carrier (2).

4. Tape in accordance with Claim 1, characterized in that, each strip (9) has a foil strip (7, 11) corresponding to the width of the strip (9) and which is linked, by adhesion to the carrier (2) of the self-adhesive tape (1) and bears the adhesive (8, 12) on the side facing away from the carrier.

5. Tape in accordance with Claim 4, characterized in that the foil strip (7, 11) consists of a tear-resistant foil.

6. Tape in accordance with Claim 1, characterized in that each of the two strips (9) is associated with its own protective foil and/or its own protective paper (10, 13), which prevents adhesion of neighbouring windings during endless winding of the self-adhesive tape (1) on a roll.

7. Tape in accordance with Claim 6, characterized in that the masking foil or masking papers (10, 13) of the two strips (9) with adhesive (8, 12) of the self-adhesive tape (1) are each less than half as wide as the carrier (2) of the masking and sealing tape (1), in such a manner that with the self-adhesive tape (1) wound up, the protective foils or protective papers (10, 13) of the two strips (9) with adhesive (8, 12) do not overlap each other between two superimposed layers of windings.

8. Tape in accordance with Claim 1, characterized in that the carrier consists of foamed high-pressure polyethylene with a water-impermeable skin on the two outer sides (5, 6).

## Revendications

1. Ruban adhésif (1) double face de couverture et d'étanchéité comportant
un support (2) en forme de ruban constitué d'un matériau moussé à pores fermés, avec deux bords (3, 4) mutuellement parallèles et deux faces (5, 6) extérieures,
un adhésif (8, 12) appliqué sur l'une des faces (5, 6) extérieures du support (2) et limité par une bande (9) qui s'étend le long des bords (3, 4) et est contiguë à ceux-ci,
une bande (9) supplémentaire d'adhésif (8, 12) qui est appliquée sur l'autre face (5, 6) extérieure du support (2), la bande (9) supplémentaire étant contiguë à l'autre bord (3, 4).

2. Ruban adhésif selon la revendication 1, caractérisé par le fait que les deux bandes (9) ont même largeur.

3. Ruban adhésif selon la revendication 1, caractérisé par le fait que chaque bande (9) a une largeur inférieure à la moitié de la largeur du support (2).

4. Ruban adhésif selon la revendication 1, caractérisé par le fait que chaque bande (9) présente une bande de film (7, 11) dont la largeur correspond à la largeur de ladite bande (9), qui est liée par matière au support (2) du ruban (1) adhésif et qui, sur sa face éloignée du support, porte l'adhésif (8, 12).

5. Ruban adhésif selon la revendication 4, caractérisé par le fait que la bande de film (7, 11) est constituée d'un film indéchirable.

6. Ruban adhésif selon la revendication 1, caractérisé par le fait qu'un film ou un papier de protection (10, 13) est associé chacune des deux bandes (9), bande ou papier de protection qui évite l'adhérence entre des tours contigus du ruban adhésif (1) lors de l'enroulement de celui-ci sur une bobine.

7. Ruban adhésif selon la revendication 6, caractérisé par le fait que le film ou le papier de protection (10, 13) des deux bandes (8, 12) du ruban adhésif (1) pourvues d'adhésif ont chacune une largeur inférieure à la moitié de la largeur du support (2) dudit ruban de couverture et d'étanchéité (1) de sorte que, lorsque le ruban adhésif (1) est enroulé, les films ou les papiers de protection (10, 13) des deux bandes (9) pourvues d'adhésif (8, 12), ne se chevauchent pas entre deux tours enroulés l'un sur l'autre.

8. Ruban selon la revendication 1, caractérisé par le fait que le support est en polyéthylène haute pression moussé dont les deux faces extérieures (5, 6) sont pourvues d'une pellicule imperméable à l'eau.
